# EUROPEAN PATENT APPLICATION

(11) **EP 2 140 756 A2**
(43) Date of publication of application: **06.01.2010**
(21) Application number: 08736689.4
(22) Date of filing: 15.02.2008
(51) Int. Cl.: A01G 27/04, A01G 9/02

(54) **PLANT POT**

(30) Priority: 16.02.2007 ES 200700329 U
(71) Applicant: Compañia De Madrid De Industria Y Comercio, S.A., 28529 Rivas Vaciamadrid Madrid (ES)
(72) Inventor: CABALLERO DE LA SERNA IBARLUCEA, Francisco, E-28529 Rivas Vaciamadrid (Madrid) (ES)
(86) International application number: PCT/ES2008/000085
(87) International publication number: WO 2008/099042

(57) **Abstract**

The pot of the invention is specially designed to take advantage of the exceeding water in the watering of the plant and to avoid the loss of water, allowing a continuous grow of the root, with a maximum use of the nutrients, providing air to the water stored achieving the oxygenation of the roots of the plant. For this, it has a double base that divides two chambers, un upper one for the culture of the plant, and a lower with functions of storage chamber for the exceeding water coming from the watering in order to use it, including two vertical and static tubes (6) and (7) that go from the bottom (3) of the lower chamber up to the upper edge of the pot, and these tubes have lateral holes (8), made below the double base (2) dividing the chambers of the pots, by which the circulation of air takes place and the subsequent oxygenation of the water and the roots.

## Description

### OBJECT OF THE INVENTION

The present invention makes reference to a pot that has some characteristic in base to which it is possible, on one side and conventionally, that waste irrigation water can be stored in a low chamber for its later reuse by the roots of the plant, with the subsequent enlargement of the irrigation period of time; while on the other, and based on some particular characteristics of the pot, it is possible to provide air to the stored water in this lower chamber and thus, to achieve an higher oxygen intake of the roots of the corresponding plant.

Accordingly, the object of the invention is to achieve the oxidation of the inorganic sulphate components carried out by heterotrophe bacteria, actinomicets and fungus in the conditions provided by the pot of this invention.

Another object of the invention is not only to allow the use of the exceeding water and to avoid its waste, but to allow the continuous grow of the root, taking the maximum advantage of all the nutrients.

### PRECEDENTS OF THE INVENTION

Pots including a double bed in the internal part to create a lower chamber under the area where sand is deposited to grow the corresponding plant are known.

This double bed, this is, the diametric pile that separates the sand from the lower chamber, has one or more holes to let exceeding water pass by, being this water stored in the lower chamber, which allows the absorption by the roots of the plant being grown in the upper part, which evidently enlarges watering periods of time.

However, as a consequence of being impossible to see the water contained in such lower chamber, being it possible for it to be full and watering again, this derives in an excess of water which ends up rotting the plant.

To avoid such problems, the Spanish use model U 9902799 describes a solution based in having a vertical tube that passes through the diametric pile or the double separating base of both chambers of the pot and the lower part of such tube reaches the base of the lower chamber, so this tube which has also concentrically introduced a second tube of lower diameter, which surpasses the top of the upper part of the first, and this second tube is fitted with an scale in the lower part of the same.

Well, shutting the upper part of the internal tube and extracting it, it acts like a pipette and lets us check the water level inside the chamber based on the scale of the tube.

However, there are not any known means that applied to pots let making the oxygenation of the irrigation water and thus of the plant.

It should be taken into account that the decay of the organic material and its transformation into sulphate inorganic parts is made by heterotrophe micro-organisms and the oxidation of sulphides and sulphur elemental to become sulphates. This decay can be carried out both by heterotrophe bacteria and chemoautotrophs, being thiobacillus the main inhabitants of the well ventilated lands.

On the other side, the aerobian oxyphil gender is the predominant in some soles being it in charge of the reaction of oxidation of sulphur.

Taking into account that the souring of land caused by sulphuric acid resulting from the oxidation of the elemental sulphur, causes an increase in the solubility of phosphorus, potassium and calcium and of several micro-nutrients, as well as the moving of some mineral of the sole which are solved by sulphuric acid, it is important to carry out the oxidation of such sole, in other words, of the inorganic components of sulphur, so a certain kina of bacteria can carry out the anaerobic oxidation and to use the nitrate as acceptor of the electron and to transform nitrates in gaseous nitrogen, at the same time as it oxides the sulphur components.

Evidently, these goals and effects are achieved by the oxidation of the sole or of the water feeding a plant on a pot, and currently, there is not any known system or mean that lets us carry out this process in agreement with our comments.

### DESCRIPTION OF THE INVENTION

The pot that is praised, being based in that described of the model U9902799, this is, with a lower exceeding water storage chamber and with a tube acting as pipette to check the level of the water stored in such lower chamber, presents the special feature of including two static tubes that pass through the separating pillar of the two chambers placed in the pot. One of these tubes is susceptible of including inside of it a concentric tube of smaller diameter fitted with a scale to be able to check the level of water in the lower chamber, although such internal tube may be independent and may be located over the external tube in the moment of carrying out such checking.

In any case, the two external and static tubes have their lateral holes facing and made below the chamber or separating diametric pillar of the two chambers of the pot, so as both tubes are opened on the top, the atmospheric air shall enter into the lower chamber, providing oxygen to the water container, air which shall enter by one of the tubes and exiting through the other.

That oxygenation taking place in the lower chamber, will equally take place on the roots of the plant, because, as it is known, such roots pass both between the internal lateral surface of the pot and between the perimeter edge of the double base, as through the communication passing holes between both chambers, so the air or oxygenation of the roots is guaranteed.

Subsequently, considering the pot as a whole, the same presents a series of advantages and new functions that, in comparison with the conventional, can be resumed in the following:
- Reuse of the exceeding watering water and possibility of knowing the amount of water stored in the storage chamber of that exceeding and reusable water.
- To avoid water loss and uncomfortable leaks, protecting the floor.
- Possibility of a continuous growth of the roots of such plants.
- Maximum use of all the nutrients.
- Easy control of the water level used for the irrigation.
- Oxidation of the sulphur components, under certain anaerobic conditions, which are made by the heterotrophe bacteria, actinomicets and fungus under certain conditions given by the characteristics of the pot itself.

### DESCRIPTIONS OF THE DRAWINGS

Additionally to the description that is being made and with the goal of helping to a better understanding of the characteristics of the invention, in agreement with a preferential example of practical development of the same, attached as integral part of such description there is a series of drawings where, as an example but not limited to, the following has been represented:
Drawing 1.- Shows a lateral view in section of the pot with the improvements of the invention, showing the two tubes the pot includes.
Drawing 2.- Shows a lateral view in section of the same pot, including this time the concentric tube with scale inside one of the static tubes.

### PREFERENTIAL DEVELOPMENT OF THE INVENTION

As can be seen in the said drawings, the pot (1) of the invention, which can be constituted under any shape and with any kina of material, preferably earthenware, and with variable size too, present the feature of including a double base (2) divided by a diametric pillar parallel to the base (3) of the pot (1), creating two chambers (4) and (5), being the upper chamber (4) that thought to the storage of the land to grow the plant, with the chamber (5) that is located below the diametric pillar or double base (2), draws a lower storage chamber for the exceeding irrigation chamber, with the possibility of reusing that water for the plant to keep on feeding even in long periods without irrigation.

Well, from these characteristics, the new feature of the invention is that the pot (1) includes a couple of tubes (6) and (7), that its vertical location presents their edges over the depth (3) of the pot (1), passing by the double base or diametric pillar (2), which tubes (6) and (7) are higher than the height of the upper edge of the pot (1).

Such tubes (6) and (7), below the double base or diametric pillar (2) separating the chambers (4) and (5), are fitted with two holes (8), facing one the other, so the external air comes into the lower chamber (5) that to store the exceeding water, through one of the tubes, and exiting through the other, indifferently, providing air to such chamber (5), this is the water contained in the same, and even the roots by the holes made on the double base (2) and even in the internal lateral surface of the pot (1) and the perimetric edge of this double base (2), pass and reach the said lower chamber of water storage (5).

Like this, we achieve the ventilation and thus, the oxidation of the inorganic components of sulphur which favour the nutrition and grow of the plant or plants that are grown in such pot (1).

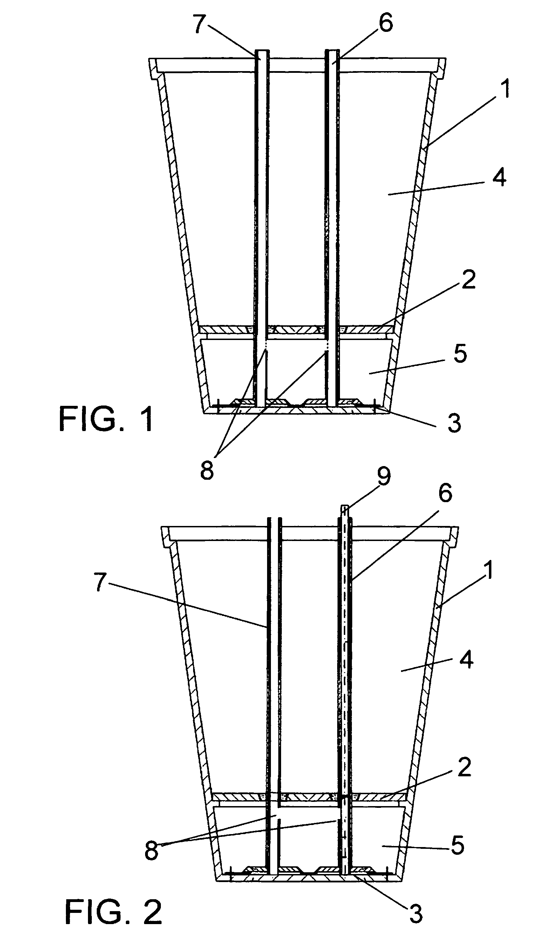

On the other side, we have to highlight the fact that one of the tubes, specifically the tube (6) represented in drawing 2, is located so there is a tube (9) of lower diameter, that is slightly higher than the upper edge of such tube (6), and which (9) allows, between the said and the lateral internal surface of the tube (6), the entry of air with the function already commented, with the feature that if this tube (9) is covered on its upper side when the tube is inside (6), and it is taken out, it will act as a pipette and water will show the level inside the chamber (5), so that according to the graduated scale of this tube (9) it will be possible to know the amount of water inside the lower storage chamber (5), so the user irrigates the pot or not (1).

## Claims

1. The pot, that being of those that include a double base to establish two chambers, an upper one for the soil of culture of the plant, and a lower one as chamber to store the exceeding watering chamber to reuse it, is characteristic because it includes two vertical and static tubes (6) and (7) that go from the bottom (3) of the lower chamber until passing the upper edge of the pot, and they have lateral facing holes (8), made below the double base (2) dividing the chambers of the pot, allowing the entry of air by one of them and exit by the other, indifferently, for the oxygenation of such lower chamber and, thus, of the water and of the roots of the plant which have gained access to such chamber.
